# EUROPEAN PATENT APPLICATION

(11) **EP 4 786 312 A1**
(43) Date of publication of application: **05.08.2026**
(21) Application number: 25155073.7
(22) Date of filing: 30.01.2025
(51) Int. Cl.: B62D 6/00

(54) **METHOD OF OPERATING A STEER-BY-WIRE SYSTEM FOR A VEHICLE AND A STEER-BY-WIRE SYSTEM**

(71) Applicant: Ford Global Technologies, LLC, Dearborn, MI 48126 (US)
(72) Inventor: Nehls, Oliver, 40474 Düsseldorf (DE); Codonesu, Sergio, 52066 Aachen (DE); Denomme, Hannah, South Lyon, MI, 48178 (US); Branham, Brian, Grass Lake, MI, 48240 (US)
(74) Representative: Markowitz, Markus

(57) **Abstract**

The disclosure generally relates to a method of operating a steer-by-wire system (12) for a vehicle (10) and a steer-by-wire system (12). The steer-by-wire system (12) comprises at least a roadwheel actuator (14) and a control device (16). The roadwheel actuator (14) includes an electric motor (22) coupled to steerable roadwheels (20) of the vehicle (10). A target angle speed based on a present target angle and at least one preceding target angle is determined by the control device (16). An adapted target angle and/or at least one adapted property of the roadwheel actuator (14) is determined by the control device (16).

## Description

The disclosure generally relates to a method of operating a steer-by-wire system for a vehicle and a steer-by-wire system for a vehicle.

Steer-by-Wire (SBW) is a new automotive steering technology, that is an evolution of Electric Power Assisted Steering (EPAS) systems. EPAS systems have a mechanical linkage to transmit a driver input at the steering wheel directly to the road wheels. In SBW, the mechanical linkage is eliminated, and two actuator sub-systems work together to steer the vehicle, namely, a feedback actuator (FBA) and a roadwheel Actuator (RWA). The FBA generates a feedback torque for the driver at the steering wheel and provides a steering command for the RWA based on an input of the driver at the steering wheel. The RWA controls the steerable roadwheels to the desired position.

A key benefit of SBW is the use of a vehicle speed dependent variable steering ratio (VGR) that can dynamically change the rack travel of the rack of the SBW in response to a given steering wheel angle. This is achieved as the VGR is not dependent on or limited by a mechanical ratio. A standard VGR implementation creates a more direct steering ratio at lower vehicle speeds and blends into a ratio that is less reactive to small inputs at higher vehicle speeds.

During operation of the SBW, clunk noise can be generated under specific circumstances. Exemplarily, clunk noise is generated when the rack quickly stops or even rapidly changes the direction of the rack travel. Due to the very direct VGR and, therefore, significantly higher rack speeds of the rack at low vehicle speeds, such as during parking operations, typical clunk noise issues at the RWA of SBW systems are significantly amplified as compared to previous steering systems having more indirect steering ratios.

Clunk noise is known from rack. However, RWAs can also be differently coupled to steerable roadwheels beyond a rack. For example, RWAs can have electric motors which are individually coupled to steerable roadwheels. However, noise similar to clunk noise can also occur in view of the alternative coupling structures if the RWA(s) is differently coupled to steerable roadwheels omitting a rack.

US 9,452,776 B1 discloses a method for characterizing steering gear reversal clunk noise in a steering system having a rack and a pinion gear, and an electric power steering assist via a steering assist motor. A control action is executed when a peak amplitude of the axial speed variation value exceeds a calibrated threshold axial speed variation value indicative of an unacceptable clunk noise. The controller may record a first diagnostic code as an output signal. Additional control steps may entail using the first diagnostic code to validate a given design of the steering system, such as by rejecting a given design in a design validation process when the diagnostic code is recorded or building a design specification.

US 2024/0208568 A1 discloses a method which may assist in providing a steering feel and/or NVH performance (Noise, Vibration and Harshness) during an initial relative movement of steering components such that clunk engagement is at least partially prevented. The method includes that the rate of movement of the steering input is determined using a higher number of output signals from a steering angle sensor under specific circumstances.

DE 10 2015 222 512 A1 and DE 10 2017 126 015 A1 disclose systems for adapting a steering offset generated by an active steering system of a vehicle. The controller may be configured to determine a steering condition and to calculate an offset reduction factor to determine a new steering offset.

Accordingly, while the issue of clunk noise has been considered previously, prior art approaches merely relate to generally influencing control mechanisms of the steering system, modifying design properties of the underlying steering system, or using different numbers of output signals of a steering angle sensor. Hence, there is a need for effective countermeasures against clunk noise, for example during regular operation of the steering system.

The subject matter of the independent claims satisfies the respective need. Further embodiments are indicated within the dependent claims and the following description, each of which, individually or in combination, may represent aspects of the disclosure.

According to an aspect, a method of operating a steer-by-wire (SBW) system for a vehicle is provided. The SBW system comprises at least a roadwheel actuator (RWA) and a control device. The RWA includes an electric motor coupled to steerable roadwheels of the vehicle. The method comprises at least the steps of:
- A present steering angle request is received by the control device. The present steering angle request defines a present target angle for steerable roadwheels of the vehicle being coupled to the RWA.
- The present target angle defined by the present steering angle request is compared by the control device to at least one preceding target angle of at least one preceding steering angle request of at least one preceding control period.
- A target angle speed is determined by the control device based on the present target angle and the at least one preceding target angle.
- An adapted target angle and/or at least one adapted property of the RWA is determined by the control device.
- A control signal for the electric motor is determined by the control device based on at least the steering angle request, the adapted target angle and/or the adapted property of the RWA.
- The control signal is output by the control device to the electric motor or an inverter coupled thereto.

The disclosure is based on the finding that the steering wheel and the RWA are disconnected. Therefore, the target angle and/or at least one property of the RWA can be modified independently from the steering wheel movement. Accordingly, the influence of the steering demand of the SBW system can be adapted. Modifications are applied to the target angle and/or at least one property of the RWA. Accordingly, the method enables adjustments such that clunk noise elsewise potentially caused by the steering demand is reduced or even prevented.

Compared to prior art approaches, the present method provides specific countermeasures against clunk noise. These countermeasures can be applied during regular use of the SBW system. Accordingly, the method is not limited to the design phase in that the entire SBW system is required to be designed differently in order to prevent clunk noise. Rather, a specific control procedure is provided such that modifications are applied to the SBW system in order to prevent clunk noise during regular operation.

Therefore, the method is configured to be retrofitted to existing SBW systems, for example, by updating a control software or a firmware of a control device of the SBW system.

Preferably, the RWA is coupled via a rack to at least one steerable road wheel. In an alternative, the RWA can also be coupled to two steerable roadwheels via a single rack. According to a further alternative, the RWA can also be differently coupled to at least one steerable roadwheel omitting a rack. In any case, a force is transmitted from an electric motor of the RWA which causes the steering angle of at least one steerable roadwheel to align according to a specific direction. The change of the torque output by the at least one electric motor of the RWA can cause clunk noise which is encountered by the method described herein. In the following, the different aspects are explained in view of a "coupling structure" being assumed to provide a coupling between the RWA and the steerable roadwheels. In some examples, the coupling structure may be a rack. However, the respective explanations can be correspondingly transferred to alternative topologies where a rack is omitted, and the coupling structure is realized differently for transmitting the force.

Optionally, the adapted target angle and/or the at least one adapted property of the RWA is determined only if:
- the target angle speed exceeds a first target angle speed threshold, and/or
- a vehicle speed of the vehicle is determined by the control device to be within a first vehicle speed threshold range, and/or
- the present target angle indicates an impending change of a direction of the target angle, and/or
- the present target angle indicates an impending stop of a steering movement.

Therefore, multiple different scenarios are contemplated as to when the adapted target angle and/or the adapted property of the RWA is to be determined. These scenarios may also be considered "entry conditions" for the adaption of the various parameters. However, in an alternative, the adaption of the specific parameters may also be performed independently of these entry conditions, i.e. permanently.

In particular, based on the entry conditions configurations can be excluded where only rather small target angle speeds are employed which commonly do not cause clunk noise. The target angle speed threshold can be set accordingly in order to adapt the method to the particular system. In addition, the method may be vehicle-speed dependent. Since the VGR of the SBW system is commonly designed such that the most direct steering ratio is provided at low vehicle speeds, the probability that a user of the SBW system takes notice of the clunk noise is highest at low vehicle speeds. Accordingly, by limiting the method to the use case of specific vehicle speeds, the application scenario is provided for the most relevant vehicle configuration. In addition, the control work is reduced thereby. Moreover, an evaluation may be applied as to whether a change of the direction or a stop of the movement may occur in near future based on the respective present target angle. If the circumstances indicate that a change of the direction of movement or a stop of the movement may take place in near future, clunk noise may occur such that the determination of the adapted target angle and/or at least one adapted property of the RWA can be initiated.

Preferably, the first vehicle speed threshold range is limited between [-x; x], wherein x denotes a first vehicle speed threshold. The first vehicle speed threshold may in particular be 10 km/h, preferably 15 km/h, more preferably 20 km/h, more preferably 2 km/h, more preferably 30 km/h.

Optionally, a determination of the adapted target angle and/or the at least one adapted property of the RWA is deactivated if:
- a direction of the present target angle compared to the at least one preceding target angle is changed relative to the reference direction and:
   ∘ a tolerance time period has passed, or
   ∘ the target angle speed is larger than a second target angle speed threshold,
and/or
- a first time period has passed after the control device determined that the present target angle indicates an impending change of a direction of the target angle, or that the present target angle indicates an impending stop of a steering movement, and/or
- the present target angle speed is smaller than a third target angle speed threshold for a second time period, and/or
- the direction of the present target angle compared to the at least one preceding target angle did not change relative to the reference direction and the present target angle speed is larger than at least one preceding target angle speed of at least one preceding control period, and/or
- the vehicle speed of the vehicle is determined to exceed a second vehicle speed threshold range.

Accordingly, multiple scenarios are contemplated when the determination of the adapted parameters is not required anymore, e.g., since a change of the direction of the present target angle did not occur or since sufficient time has passed after the change of the direction of the target angle did take place. These scenarios may be referred to as "exit conditions". In these cases, the limitation of the adapted target angle and/or the at least one adapted property of the RWA can be lifted and the SBW system can be operated at regular procedures.

Optionally, deactivating of the determination of the adapted target angle and/or the at least one adapted property of the RWA is considered only if the determination was activated before, e.g., based on one of the entry conditions described herein.

In an alternative, deactivating the determination procedure of the adapted target angle and/or the at least one adapted property of the RWA can also be entirely avoided. Put differently, the determination procedure of the adapted target angle and/or the at least one adapted property of the RWA can be active all time.

Preferably, the second vehicle speed threshold is limited insofar that for actual vehicle speeds z with z < -y or z > y the exit condition is met, y denotes a second vehicle speed threshold. The second vehicle speed threshold can in particular correspond to the first vehicle speed threshold described herein before.

Optionally, the second vehicle speed threshold is equal to the first vehicle speed threshold. In this case, the control procedure is compact.

Alternatively, the second vehicle speed threshold may be different from the first vehicle speed threshold, in particular larger than the first vehicle speed threshold. Accordingly, a hysteresis is provided such that a more stable control procedure is achieved omitting fluctuating behavior.

In an alternative y can also correspond to y = x + Δv, where Δv is 5 km/h, preferably Δv is 3 km/h. Therefore, a hysteresis can be enabled.

Optionally, if an exit condition is met and in case the at least one property of the RWA was adapted, the at least one property of the RWA is modified to an initial property thereof before the adaptation. Accordingly, the SBW system can return to initial properties before any adaption was initiated.

According to an aspect, the control device may determine a ramp parameter. The control device enables and/or disables a change between the present target angle and the adapted target angle and/or between an unmodified property of the RWA and the adapted property of the RWA based on the ramp parameter. The ramp parameter guarantees a smooth transition between the regular configuration including the present target angle and the unmodified property of the RWA and the adapted configuration including the adapted target angle and/or the adapted property of the RWA. Therefore, abrupt effects can be prevented such that the comfort is enhanced.

Preferably, the ramp parameter can in particular be considered when the determination of the adapted target angle and/or the adapted property of the RWA is activated or deactivated based on at least one entry condition or exit condition. Thus, the ramp parameter can also be considered when performing a transition back from the adapted configuration to the regular configuration, once the modification achieved by the method is unnecessary, for example if the vehicle speed exceeds a respective vehicle speed threshold.

Optionally, the at least one adapted property of the RWA is based on a motor torque gradient limiter configured to limit a torque gradient of a torque output by the electric motor of the RWA to be smaller than a torque gradient threshold. The motor torque gradient refers to the rate of change of the motor torque. By limiting the motor torque gradient, the speed at which the motor torque can change is limited. Put differently, the agility of the change of the motor torque is limited such that the changes are less abrupt but rather slow. Based on the limited torque gradient, a sudden removal or reversal of the motor torque can be prevented, which elsewise would cause clunk noise.

Preferably, the gradient limitation applied by the motor torque gradient limiter can be applied before and during the reversal of the change of the direction of the target angle relative to the reference direction, i.e. the change of the direction of movement of the coupling structure.

According to an aspect, the torque gradient may be limited based on at least one of:
- a first constant value,
- the vehicle speed,
- the torque applied by the electric motor of the RWA,
- the target angle speed,
- a derivative of the target angle speed, and
- the present target angle.

For example, the torque gradient can be limited so as to be reduced with increasing vehicle speeds. Alternatively, or cumulatively, the torque gradient can be limited so as to be reduced for higher torque levels. Alternatively, or cumulatively, the torque gradient can be limited so as to be reduced close to the "turn-around" point defined by the target angle speed = 0 deg/s. Alternatively or cumulatively, the torque gradient can be limited so as to be reduced for higher values of the derivative of the target angle speed. Alternatively, or cumulatively, the torque gradient can be not limited if the present target angle is already close to a coupling structure end such that hitting the coupling structure end stop is prevented. By limiting the motor torque gradient if the present target angle is close to the coupling structure end, an "overshooting" may occur enhancing the intensity of the hit on the coupling structure end stop. Accordingly, this scenario and the stress caused thereby can be prevented when the torque gradient is not limited in this case. Consequently, the motor torque gradient limiter can be adapted in various different ways so as to adjust the limiting effect based on the specific demands of the respective SBW system. In other words, the characteristics of the motor torque gradient limiter can be tailored as desired.

According to an aspect, the adapted target angle may be based on a target angle request limiter configured to limit the derivative of the target angle speed. This means that the rate of change of the target angle speed can be limited. This also leads to slower changes of the movement of the coupling structure. Accordingly, clunk noise can be reduced or prevented thereby.

In fact, the limitation of the derivative of the target angle speed leads to a change of the target angle. For example, if the speed is limited, the adapted target angle moves further than without the limiter, such as in view of the present (unmodified) target angle. This in turn leads to a change in path. In other words, the steering angle would initially "overshoot" the "turn-around" position and would afterwards "catch-up" to the desired position, namely the intended target angle (present target angle). This is no issue, since at low vehicle speeds the vehicle reacts slowly to the angles and the driver does not notice small and/or short deviations from the intended target angle (present target angle).

Preferably, the target angle request limiter may limit the derivative of the target angle speed based on a target angle speed derivative interval defining a negative target angle speed derivative threshold and a positive target angle speed derivative threshold. Hence, the derivative of the target angle speed can be tailored in view of the respective SBW system.

Optionally, the negative target angle speed derivative threshold and the positive target angle speed derivative threshold individually or cooperatively may depend on at least one of:
- a second constant value,
- the vehicle speed,
- the target angle speed, and
- the present target angle.

For example, the threshold values can be adapted in view of the vehicle speed. Accordingly, for higher vehicle speeds, the threshold values can be comparatively small. Alternatively, or cumulatively, the threshold values can be not limited if the present target angle is already close to a coupling structure end such that hitting the coupling structure end stop is prevented. By reducing the threshold values if the present target angle is close to the coupling structure end, an "overshooting" may occur enhancing the intensity of the hit on the coupling structure end stop. Accordingly, this scenario and the stress caused thereby can be prevented when the threshold values are not limited in this case, in particular, if they are not reduced. Consequently, the threshold values of the target angle speed derivative can be adapted in various different ways so as to adjust the limiting effect based on the specific demands of the respective SBW system.

According to an aspect, the adapted target angle may be based on a target angle filter, in particular a low-pass filter, applied by the control device to the present target angle. The target angle filter also provides a smoothening of the present target angle, thus, causing an adapted target angle. The target angle filter provides a very compact modification procedure.

Optionally, the target angle filter may be a first-order low-pass filter or a higher-order low-pass filter. Thus, the target angle filter can be tailored in order to fit the respective SBW system.

Preferably, a cut-off frequency and/or poles and/or zeros of the target angle filter may depend on at least one of:
- a third constant value,
- the vehicle speed,
- the target angle speed,
- the derivative of the target angle speed, and
- the present target angle.

For example, by adapting the cut-off frequency and/or poles and/or zeros of the target angle filter, the filtering effect (filtering efficiency) can be reduced with increasing vehicle speeds. Alternatively, or cumulatively, the filtering effect can be reduced for higher values of the derivative of the target angle speed. Alternatively, or cumulatively, the filtering effect can be reduced if the present target angle is already close to a coupling structure end such that hitting the coupling structure end stop is prevented. By reducing the filtering effect, the "overshooting effect" can be limited such that a hit on the coupling structure end stop may be reduced in intensity or even be prevented. Thus, the filtering effect can be tailored based on the specific demands of the respective SBW system.

According to another aspect, the at least one adapted property of the RWA may be based on a modified stiffness of an angle controller of the RWA. The shape of the torque request, especially its gradients, is mainly defined by the stiffness and damping of the angle controller of the RWA. The stiffer the angle controller, the higher the gradients. The stiffer the angle controller, the better the angle tracking, but also the higher the changes of the angular speed are. In a SBW application, it is desirable that the tracking is as good as possible. However, such high stiffnesses would increase the probability of clunk noise. Therefore, in order to reduce or to prevent clunk noise, the angle controller stiffness can be adapted.

Preferably, the angle controller may be part of the control device.

Optionally, the stiffness of the angle controller may be modified based on at least one of:
- a gain of the angle controller,
- a pole of the angle controller, and
- a zero of the angle controller.

While the change of the poles or zeros of the angle controller provide an indirect modification of the angle controller performance, the modification of the gain represents a direct change. For example, a proportional gain, and/or an integral gain, and/or a differential gain of the angle controller may be adjusted in view of a PID-based angle controller included with the RWA.

Preferably, the gain and/or the pole and/or the zero of the angle controller may be modified based on at least one of:
- a fourth constant value,
- the vehicle speed,
- the target angle speed,
- the derivative of the target angle speed, and
- the present target angle.

For example, the stiffness of the angle controller can be increased by adjusting the specifics with increasing vehicle speeds. Alternatively, or cumulatively, the stiffness of the angle controller can be reduced by adjusting the specifics for higher values of the derivative of the target angle speed. Alternatively, or cumulatively, the modification of the stiffness of the angle controller can be prevented if the present target angle is already close to a coupling structure end such that hitting the coupling structure end stop is prevented. Therefore, overshooting which may occur for reduced stiffnesses can be prevented such that a hit on the coupling structure end stop may be reduced in intensity or even be prevented.

In one aspect, the control signal for the electric motor may be determined by the control device based on additional input variables, such as the vehicle speed, the lateral velocity gradient of the vehicle, and/or other vehicle parameters. Thus, a tailored control signal is provided.

Preferably, the method is a computer-implemented method. Therefore, at least one data processing device is applied to perform the method. For example, the data processing device may be part of the control device.

According to another aspect, the disclosure also relates to a computer program product comprising instructions which, when the computer program product is executed by a processor, cause the processor to carry out the method described above. The advantages achieved by the method described herein are also achieved in a corresponding manner by the computer program product.

According to an additional aspect, the disclosure also relates to a computer-readable storage medium comprising instructions that, when the computer program product is executed by a processor, cause the processor to carry out the method described above. The advantages achieved by the method described herein are also achieved in a corresponding manner by the computer-readable storage medium.

According to another aspect, a SBW system for a vehicle is provided. The SBW system comprises at least a RWA and a control device. The RWA includes an electric motor coupled via a coupling structure to steerable roadwheels of the vehicle. Based on the control device and/or the RWA, the SBW system is configured for carrying out the method as described hereinbefore. The advantages achieved by the before described method are also realized by the SBW system in a corresponding manner. In particular, the probability of an occurrence of clunk noise can be reduced by the respective countermeasures, thereby enhancing the comfort.

According to another aspect, a vehicle having a SBW system as explained hereinbefore is provided. The vehicle may be a hybrid vehicle, a vehicle having a combustion engine or an electric vehicle. The vehicle may in particular be a land-based vehicle. The advantages achieved by the before described method are also realized by the vehicle in a corresponding manner.

The disclosure and further advantageous embodiments and developments of the same are described and explained in more detail below on the basis of the examples shown in the drawings. The figures show:
- Fig. 1 a vehicle having a SBW system according to an embodiment,
- Fig. 2 a method of operating a steer-by-wire system for a vehicle according to an embodiment, and
- Fig. 3 a schematic representation of the control procedure performed by the control device according to an embodiment.

All features mentioned below with regard to the examples and/or the accompanying figures can be combined alone or in any sub-combination with features of the embodiments, including features of preferred embodiments.

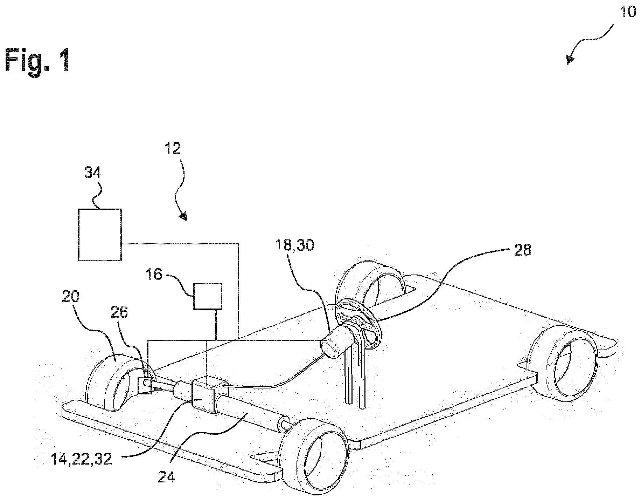

Fig. 1 shows a simplified schematic representation of a vehicle 10 with a SBW system 12 according to an embodiment.

The SBW system 12 comprises a RWA 14 and a control device 16. The SBW system 12 also comprises an FBA 18. The FBA 18 and the RWA 14 are coupled to each other and to the control device 16.

The RWA 14 is indirectly coupled to steerable roadwheels 20 of the vehicle 10. For this purpose, according to the present embodiment, the RWA 14 has an electric motor 22 which is coupled to a coupling structure 24, here a rack. The coupling structure 24 is coupled to the steerable roadwheels 20 of the vehicle 10. The displacement of the coupling structure 24 in view of a reference position, such as a zero position (straight position), leads to a change of the orientation of the steerable roadwheels 20 about the steering axes of the respective wheels 20.

The SBW system 12 has a sensor 26 that is configured to detect an operating parameter of the SBW system 12 that is influenced by the operation of the RWA 14, such as a steering angle of the steerable roadwheels 20 or a coupling structure travel of the coupling structure 24. In a further alternative, the sensor 26 can also be designed as a torque sensor that is configured to detect the torque output by an electric motor 22 of the RWA 14 to a component coupled thereto, such as the coupling structure 24. Furthermore, the measured values of the operating parameter detected in this way are transmitted from the sensor 26 to the RWA 14 and/or the FBA 18 and/or the control device 16.

Of course, several sensor units can also jointly form the sensor 26, whereby a mutual plausibility check and redundancy are provided.

The SBW system 12 also has a steering wheel 28, to which the FBA 18 is coupled at least indirectly, for example via a steering column. The FBA 18 is designed to exert a feedback torque on the steering wheel 28 so that the driver of the vehicle 10 is given a feeling of the lateral guidance of the vehicle 10.

A driver of the vehicle 10 can use the steering wheel 28 to make steering inputs for the vehicle 10.

The SBW system 12 also comprises at least one steering wheel sensor 30 that is configured to detect a steering wheel angle, i.e. a steering wheel position, of the steering wheel 28 with respect to a reference position, for example a center position (zero position). Consequently, the steering wheel sensor 30 can be used to detect steering inputs of the driver of the vehicle 10 based on the steering wheel 28. In this regard, by a steering input, a specific present steering angle request is defined. A present steering angle request corresponds to a specific present target angle according to which the steerable roadwheels 20 shall be oriented. By modifying the steering wheel position, the present steering angle request is dynamically changed by the user which in turn leads to a dynamic change of the present target angle. Accordingly, the present target angle is modified at a specific target angle speed which is determinable when comparing the present target angle with at least one preceding target angle of at least one preceding control period.

In accordance with this embodiment, the steering wheel sensor 30 is integral with the steering wheel actuator 18. However, in other embodiments, the steering wheel sensor 30 may be separate from the steering wheel actuator 18. The steering wheel sensor 30 is configured to communicate the sensed steering wheel angle with the RWA 14 and/or with the FBA 18 and/or the control device 16.

The control device 16 is depict as being separate from the RWA 14 and the FBA 18. In alternative embodiments the control device 16 can also be partially or fully embedded in the RWA 14 or the FBA 18 or can be formed of two individual portions both of which being assigned to different components, such as the RWA 14 and the FBA 18.

The control device 16 includes a data processing device. The control device 16 is configured to receive steering angle requests from the steering wheel sensor 30. Based on the received steering angle requests, the control device 16 may determine the corresponding present target angle and other variables or properties of the SBW system 12. In this regard, the control device 16 at least comprises an angle controller 32 configured to determine the respective target angle depending on the received steering angle request.

The control device 16 is also configured to output respective control signals to the electric motor 22 of the RWA 14 or an inverter coupled thereto and/or the FBA 18. For executing the respective control routines, the control device 16 can take into account further parameters of the vehicle 10, for example the vehicle speed. Based on the control signal, an output torque is provided by the electric motor 22 of the RWA in order to orient the steerable roadwheels 20 accordingly. Here, the output torque is exerted by the electric motor 22 of the RWA 14 on the coupling structure 24, so that indirectly an orientation of the steerable roadwheels 20 is modified.

The sensor 26 detects a property influenced by the RWA 14, such as a displacement of the coupling structure 24 and transmits the detected property to the control device 16 and/or the FBA 18 which in turn determines a corresponding feedback torque that is output to the steering wheel 28.

The SBW system 12 can, of course, also have several components of the same type and generally the same function, for example several steering wheel sensors 30, whereby redundancy is ensured.

According to this embodiment, the vehicle 10 comprises a higher-level driving control device 34 that is configured to perform autonomous or semi-autonomous driving functionalities. For example, the higher-level driving control device 34 can autonomously affect the lateral control of the vehicle 10 in this way. To do this, the higher-level driving control device 34 can, for example, transmit a steering angle request to the RWA 14 and/or the FBA 18 and/or the control device 16 of the SBW system 12.

Here, the SBW system 12 is shown as a front axle steering. The vehicle 10 and the SBW system 12 may optionally also have further steerable roadwheels 20, for example rear wheels, which are coupled to an additional common RWA 14.

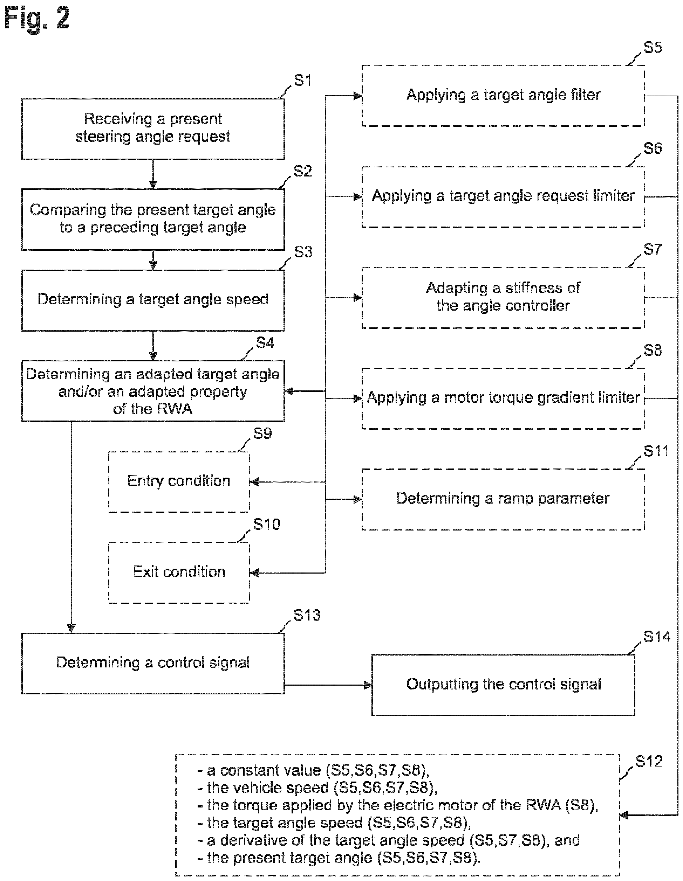

Fig. 2 shows a method of operating a SBW system 12 for a vehicle 10 according to an embodiment.

According to step S1 a present steering angle request is received by the control device 16. The present steering angle request defines a present target angle for steerable roadwheels 20 of the vehicle 10 being coupled via the coupling structure 24 to the RWA 14.

In subsequent step S2 the control device 16 compares the present target angle defined by the present steering angle request to at least one preceding target angle of at least one preceding steering angle request of at least one preceding control period. This means that the control device 16 evaluates the change of the present target angle in view of the at least one preceding target angle.

The method comprises the subsequent step S3, in which the control device 16 determines a target angle speed based on the present target angle and the at least one preceding target angle. In this regard, the control device 16 may initially determine a difference between the present target angle and the at least one preceding target angle. Based on the time length of the control period the target angle speed may then be determined. In this regard, the target angle speed describes whether fast or slow changes of the roadwheel angle are requested.

Afterwards, the control device 16 determines in step S4 an adapted target angle and/or at least one adapted property of the RWA 14. Accordingly, the parameters of the SBW system 12 can be influenced.

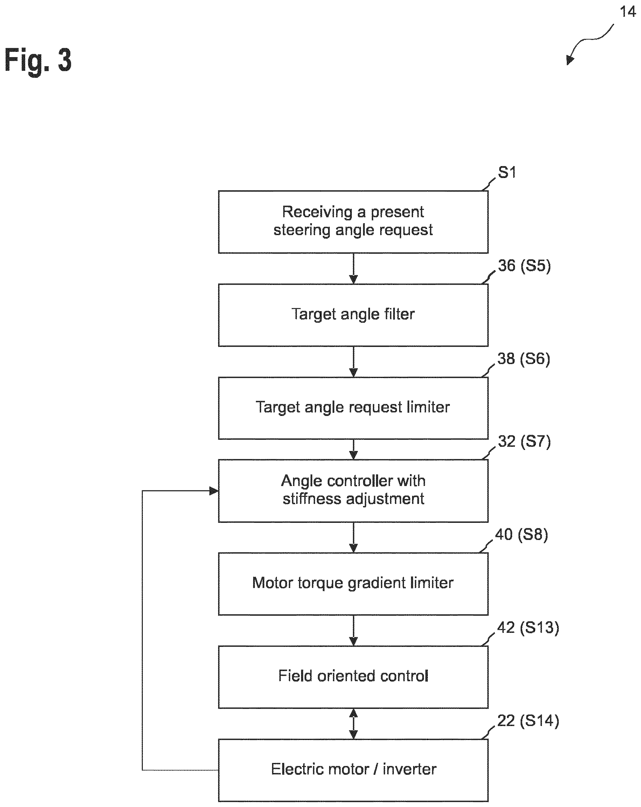

Step S4 can be modified by any one or multiple of optional steps S5 to S12. In this regard, Fig. 3 shows a schematic representation of the control procedure performed by the control device 16 according to an embodiment. As already explained, the control procedure is based on the control device 16 initially receiving the present steering angle request.

According to optional step S5 the control device 16 applies a target angle filter 36 to the present target angle defined by the received present steering angle request, see also Fig. 3. The target angle filter 36 provides a smoothening of the present steering angle request. The characteristics of the target angle filter 36 can be modified by adapting its cut-off frequency and/or poles and/or zeros. Preferably, the target angle filter 36 may be a first-order low-pass filter or a higher-order low-pass filter. Due to the filtering effect of the target angle filter 36, the present target angle is modified into an adapted target angle determined by the control device 16.

Step S4 can also be modified by optional step S6, in which the control device 16 applies a target angle request limiter 38, see also Fig. 3. The target angle request limiter 38 is configured to limit the derivative of the target angle speed. Therefore, the changes of the target angle speed can be efficiently maintained within an appropriate interval such that too high changes in the target angle speeds are prevented. Thus, the probability of clunk noise can be reduced or clunk noise can even be prevented.

The target angle request limiter 38 limits the derivative of the target angle speed based on a target angle speed derivative interval defining a negative target angle speed derivative threshold and a positive target angle speed derivative threshold. Accordingly, the interval to which the target angle speed is restricted, can be tailored in view of the respective SBW system 12.

Optional step S7 can also be used to modify step S4. The control device 16 comprises an angle controller 32. The angle controller 32 comprises control loops in order to determine as to how the electric motor 22 of the RWA 14 is to be controlled in order to serve the present steering angle request, optionally taking into account the adapted target angle. In this regard, the angle controller 32 may comprise feedback loops and/or feedforward loops. According to the present embodiment of the SBW system 12, properties of the angle controller 32 can be modified thereby adapting properties of the RWA 14. In particular, according to optional step S7, a stiffness of the angle controller 32 is adjusted, see also Fig. 3. The stiffness of the angle controller 32 describes how direct a change of the orientation of the steerable roadwheels 20 is performed in view of a respective steering angle request. The stiffness of the angle controller 32 can be influenced in optional step S7 by modifying at least one or multiple of a gain of the angle controller 32, a pole of the angle controller 32, and/or a zero of the angle controller 32. Thereby, the characteristics of the angle controller 32 are adjusted which in turn leads to an adapted stiffness of the angle controller 32.

Step S4 can also be modified by optional step S8, in which a motor torque gradient limiter 40 is applied, see also Fig. 3. The motor torque gradient limiter 40 is configured to limit a torque gradient of a torque output by the electric motor 22 of the RWA 14 to be smaller than a torque gradient threshold. In other words, the rate of change of the torque which is output by the electric motor 22 of the RWA 14 is restricted to being below the torque gradient threshold. Therefore, fast torque changes output by the electric motor 22 are prevented. This also leads to a modified property of the RWA 14.

In principle, the determination of the adapted target angle and/or the adapted property of the RWA 14 can be active all time.

However, in an alternative, the determination can also rely on as to whether an entry condition or an exit condition met. Thus, in view of the optional steps S5 to S8, the control device 16 can further adapt the modification procedure performed within these optional steps for determining an adapted target angle and/or an adapted property of the RWA 14. In this regard, optional step S9 can be applied, in which the control device 16 considers as to whether an entry condition is met. Accordingly, the adapted target angle and/or the at least one adapted property of the RWA 14 is determined by the control device 16 only if:
- the target angle speed exceeds a first target angle speed threshold, and/or
- a vehicle speed of the vehicle is determined by the control device 16 to be below within a first vehicle speed threshold range, and/or
- the present target angle indicates an impending change of a direction of the target angle, and/or
- the present target angle indicates an impending stop of a steering movement.

Put differently, one example condition refers to the modifications being performed only at comparatively low vehicle speeds. This is caused as in these scenarios a more direct steering ratio is provided for the driver such that the driver would take notice of the clunk noise at high probability.

In different scenarios, the control device 16 evaluates whether quick changes of the roadwheel angle are requested (target angle speed higher the first target angle speed threshold). A different entry condition is met if the derivative of the target angle changes the sign which corresponds to a change of the direction of the steering movement.

The direction of the steering movement may optionally be evaluated in view of a reference direction. In this regard, the reference direction may be the neutral direction (straight direction) of the steerable roadwheels 20. Note that a change of the direction of the steering movement may independently occur from the coupling structure being positioned according to the center position (neutral position).

According to an alternative entry condition, the target angle is such that it indicates an impending stop of the steering movement. This means a target angle indicates that a specific target angle may be maintained in the near future. For example, a previous constant target angle speed may rapidly approach a speed of 0°deg/s.

Hence, different scenarios may be evaluated by the control device 16 in order to determine whether an entry condition is met.

In addition or as an alternative, the method may also comprise optional step S10 such that the control device 16 evaluates whether an exit condition is met. Thus, the determination of the adapted target angle and/or the at least one adapted property of the RWA 14 is deactivated if:
- a direction of the present target angle compared to the at least one pre-ceding target angle is changed relative to the reference direction and:
   ∘ a tolerance time period has passed, or
   ∘ the target angle speed is larger than a second target angle speed threshold,
and/or
- a first time period has passed after the control device 16 determined that the present target angle indicates an impending change of a direction of the target angle, or that the present target angle indicates an impending stop of a steering movement, and/or
- the present target angle speed is smaller than a third target angle speed threshold for a second time period, and/or
- the direction of the present target angle compared to the at least one preceding target angle did not change relative to the reference direction and the present target angle speed is larger than at least one preceding target angle speed of at least one preceding control period, and/or
- the vehicle speed of the vehicle 10 is determined to exceed a second vehicle speed threshold range.

As an example, the control device 16 may consider the vehicle speed to determine as to when a modification according to step S4 is ended. In particular, the control device 16 may end the modification of the present target angle and/or may change back the at least one adapted property of the RWA 14 to an initial unmodified property of the RWA 14 if the vehicle speed of the vehicle 10 is determined to exceed a second vehicle speed threshold range. This means if the velocity of the vehicle 10 is increased to comparatively high vehicle speeds, the modification procedure as explained in view of step S4 and optional steps S5 to S8 is ended. In this case, the control procedures performed by the control device 16 of the SBW system 12 change back to regular operation.

In a different scenario, a change of direction of the present target angle took place and either an appropriate time period has passed, or the target angle speed has increased over the second target angle speed threshold again. Since clunk noise primarily occurs at the point of the directional change, both criteria (sufficient time period or increasing target angle speed) indicate that the system configuration of the SBW system 12 moves away from the scenario in which clunk noise may occur.

An exit condition can also be met by an additional scenario which relates to a pure time-based control procedure. It is assumed that after a sufficient time period the scenario, in which clunk noise may occur, is not present anymore. In this case, the control procedure is very compact.

According to a further scenario, if the present target angle speed is smaller than a third target angle speed threshold for a second time period, the target angle speed may be assumed to be so small that clunk noise cannot occur. The scenario also relates to a very compact control procedure.

An additional end condition is met according to a scenario if the direction of the present target angle compared to the at least one preceding target angle did not change and the present target angle speed is larger than at least one preceding target angle speed of at least one preceding control period. In this case, a directional change of the steering movement did not occur. Rather, the steering movement approached a scenario in which a directional change could possibly be assumed while, however, this directional change did not occur but the steering movement was performed according to a single direction only. In this case, clunk noise cannot occur.

Entry and exit conditions according to steps S9 and S10 can be applied individually or in combination to any one or multiple of the optional steps S5 to S8.

In addition, step S4 and optional steps S5 to S8 can also be modified by optional step S11. In this case, the control device 16 determines at least one ramp parameter. The single or multiple ramp parameters can be applied when modifying the present target angle into the adapted target angle and/or when modifying an initial (unmodified) property of the RWA 14 into an adapted property. In particular, the ramp parameter can be considered in view of any one of the target angle filter 36, the target angle request limiter 38, the stiffness adjustment of the angle controller 32, and the motor torque gradient limiter 40. Based on the ramp parameter smooth transitions between the unmodified and the modified configuration can be achieved. Of course, the ramp parameter can also be considered when returning from the modified configuration into the unmodified configuration if the modification procedure applied by the control device 16 is ended, for example since the vehicle speed exceeds the second vehicle speed threshold.

Optional steps S5 to S8 can be further adjusted by considering specific input values based on which the respective modifications can be applied. Accordingly, optional step S12 can be used to modify the characteristics of the target angle filter 36, the target angle request limiter 38, the stiffness adjustment of the angle controller 32, and the motor torque gradient limiter 40. In optional step S12, several variables are listed in view of the steps which can be modified thereby (specified in brackets).

Different constant values can be used to adapt the cut-off frequency and/or poles and/or zeros of the target angle filter 36, to individually or cooperatively adapt the negative target angle speed derivative threshold and the positive target angle speed derivative threshold of the target angle request limiter 38, to adapt the gain and/or the pole and/or the zero of the angle controller 32, and/or to adapt the torque gradient based on the motor torque gradient limiter 40. Also, the vehicle speed, and/or the target angle speed, and/or the present target angle can be used instead or in addition to different constant values in this regard.

Moreover, the derivative of the target angle speed can be used to adapt the cut-off frequency and/or poles and/or zeros of the target angle filter 36, to adapt the gain and/or the pole and/or the zero of the angle controller 32, and/or to adapt the torque gradient based on the motor torque gradient limiter 40.

In addition, the torque applied by the electric motor 22 of the RWA 14 can be used to adapt the torque gradient based on the motor torque gradient limiter 40.

Subsequent to step S4 the method comprises step S13 in which the control device 16 determines a control signal for the electric motor 22 based on the steering angle request, the adapted target angle and/or the adapted property of the RWA 14. Fig. 3 shows that a field-oriented control 42 of the control device 16 is applied in this regard.

Afterwards, the method comprises step S14 in which the control device 16 outputs the control signal determined in step S13 to the electric motor 22 or an inverter coupled thereto. Subsequently, the electric motor 22 applies a torque such that the orientation of the steerable roadwheels 20 is modified based on the steering angle request, the adapted target angle and/or the adapted property of the RWA 14.

All threshold values, time periods, and constant values can be adapted according to the respective needs in order to tailor the described method.

## Claims

1. A method of operating a steer-by-wire system (12) for a vehicle (10), the steer-by-wire system (12) comprising at least a roadwheel actuator (14) and a control device (16), the roadwheel actuator (14) including an electric motor (22) coupled to steerable roadwheels (20) of the vehicle (10), the method comprising at least the steps of:
- Receiving a present steering angle request by the control device (16), wherein the present steering angle request defines a present target angle for steerable roadwheels (20) of the vehicle (10),
- Comparing the present target angle defined by the present steering angle request to at least one preceding target angle of at least one preceding steering angle request of at least one preceding control period by the control device (16),
- Determining a target angle speed based on the present target angle and the at least one preceding target angle by the control device (16),
- Determining an adapted target angle and/or at least one adapted property of the roadwheel actuator (14) by the control device (16),
- Determining a control signal for the electric motor (22) by the control device (16) based on at least the steering angle request, the adapted target angle and/or the adapted property of the roadwheel actuator (14), and
- Outputting the control signal by the control device (16) to the electric motor (22) or an inverter coupled thereto.

2. The method according to claim 1, wherein the adapted target angle and/or the at least one adapted property of the roadwheel actuator (14) is determined only if:
- the target angle speed exceeds a first target angle speed threshold, and/or
- a vehicle speed of the vehicle (10) is determined to be within a first vehicle speed threshold range by the control device (16), and/or
- the present target angle indicates an impending change of a direction of the target angle, and/or
- the present target angle indicates an impending stop of a steering movement.

3. The method according to claims 1 or 2, wherein a determination of the adapted target angle and/or the at least one adapted property of the roadwheel actuator (14) is deactivated if:
- a direction of the present target angle compared to the at least one preceding target angle is changed relative to the reference direction and:
∘ a tolerance time period has passed, or
∘ the target angle speed is larger than a second target angle speed threshold,
and/or
- a first time period has passed after the control device determined that the present target angle indicates an impending change of a direction of the target angle, or that the present target angle indicates an impending stop of a steering movement, and/or
- the present target angle speed is smaller than a third target angle speed threshold for a second time period, and/or
- the direction of the present target angle compared to the at least one preceding target angle did not change relative to the reference direction and the present target angle speed is larger than at least one preceding target angle speed of at least one preceding control period, and/or
- the vehicle speed of the vehicle (10) is determined to exceed a second vehicle speed threshold range.

4. The method according to claim 3, wherein, in case the at least one property of the roadwheel actuator (14) was adapted, the at least one property of the roadwheel actuator (14) is modified to an initial property thereof before the adaption.

5. The method according to any one of the preceding claims, wherein the control device (16) determines a ramp parameter, and wherein the control device (16) enables and/or disables a change between the present target angle and the adapted target angle and/or between an unmodified property of the roadwheel actuator (14) and the adapted property of the roadwheel actuator (14) based on the ramp parameter.

6. The method according to any one of the at least one preceding claims, wherein the at least one adapted property of the roadwheel actuator (14) is based on a motor torque gradient limiter (40) configured to limit a torque gradient of a torque output by the electric motor (22) of the roadwheel actuator (14) to be smaller than a torque gradient threshold.

7. The method of claim 6, wherein the torque gradient is limited based on at least one of:
- a first constant value,
- the vehicle speed,
- the torque applied by the electric motor (22) of the roadwheel actuator (14),
- the target angle speed,
- a derivative of the target angle speed, and
- the present target angle.

8. The method according to any one of the at least one preceding claims, wherein the adapted target angle is based on a target angle request limiter (38) configured to limit the derivative of the target angle speed.

9. The method of claim 8, wherein the target angle request limiter (38) limits the derivative of the target angle speed based on a target angle speed derivative interval defining a negative target angle speed derivative threshold and a positive target angle speed derivative threshold.

10. The method of claim 9, wherein the negative target angle speed derivative threshold and the positive target angle speed derivative threshold individually or cooperatively depend on at least one of:
- a second constant value,
- the vehicle speed,
- the target angle speed, and
- the present target angle.

11. The method according to any one of the at least one preceding claims, wherein the adapted target angle is based on a target angle filter (36) applied by the control device (16) to the present target angle.

12. The method of claim 11, wherein the target angle filter (36) is a first-order low-pass filter or a higher-order low-pass filter.

13. The method of claims 11 or 12, wherein a cut-off frequency and/or poles and/or zeros of the target angle filter (36) depend on at least one of:
- a third constant value,
- the vehicle speed,
- the target angle speed,
- the derivative of the target angle speed, and
- the present target angle.

14. The method according to any one of the preceding claims, wherein the at least one adapted property of the roadwheel actuator (14) is based on a modified stiffness of an angle controller (32) of the roadwheel actuator (14).

15. The method of claim 14, wherein the stiffness of the angle controller (32) is modified based on at least one of:
- a gain of the angle controller (32),
- a pole of the angle controller (32), and
- a zero of the angle controller (32).

16. The method of claim 15, wherein the gain and/or the pole and/or the zero of the angle controller (32) is modified based on at least one of:
- a fourth constant value,
- the vehicle speed,
- the target angle speed,
- the derivative of the target angle speed, and
- the present target angle.

17. A steer-by-wire system (12) for a vehicle (10), the steer-by-wire system (12) comprising at least a roadwheel actuator (14) and a control device (16), the roadwheel actuator (14) including an electric motor (22) coupled to steerable roadwheels (20) of the vehicle (10), wherein the steer-by-wire system (12) is configured for carrying out the method according to any one of the at least one preceding claims based on the control device (16) and/or the roadwheel actuator (14).

## Amended claims

### Amended claims in accordance with Rule 137(2) EPC.

1. A method of operating a steer-by-wire system (12) for a vehicle (10), the steer-by-wire system (12) comprising at least a roadwheel actuator (14) and a control device (16), the roadwheel actuator (14) including an electric motor (22) coupled to steerable roadwheels (20) of the vehicle (10), the method comprising at least the steps of:
- Receiving a present steering angle request by the control device (16), wherein the present steering angle request defines a present target angle for steerable roadwheels (20) of the vehicle (10),
- Comparing the present target angle defined by the present steering angle request to at least one preceding target angle of at least one preceding steering angle request of at least one preceding control period by the control device (16),
- Determining a target angle speed based on the present target angle and the at least one preceding target angle by the control device (16),
- Determining an adapted target angle by the control device (16),
- Determining a control signal for the electric motor (22) by the control device (16) based on at least the steering angle request and the adapted target angle, and
- Outputting the control signal by the control device (16) to the electric motor (22) or an inverter coupled thereto,
wherein the method is **characterized in that** a determination of the adapted target angle is deactivated if:
- a direction of the present target angle compared to the at least one preceding target angle is changed relative to the reference direction and:
∘ a tolerance time period has passed, or
∘ the target angle speed is larger than a second target angle speed threshold,
and/or
- a first time period has passed after the control device determined that the present target angle indicates an impending change of a direction of the target angle, or that the present target angle indicates an impending stop of a steering movement, and/or
- the present target angle speed is smaller than a third target angle speed threshold for a second time period, and/or
- the direction of the present target angle compared to the at least one preceding target angle did not change relative to the reference direction and the present target angle speed is larger than at least one preceding target angle speed of at least one preceding control period, and/or
- the vehicle speed of the vehicle (10) is determined to exceed a second vehicle speed threshold range.

2. A method of operating a steer-by-wire system (12) for a vehicle (10), the steer-by-wire system (12) comprising at least a roadwheel actuator (14) and a control device (16), the roadwheel actuator (14) including an electric motor (22) coupled to steerable roadwheels (20) of the vehicle (10), the method comprising at least the steps of:
- Receiving a present steering angle request by the control device (16), wherein the present steering angle request defines a present target angle for steerable roadwheels (20) of the vehicle (10),
- Comparing the present target angle defined by the present steering angle request to at least one preceding target angle of at least one preceding steering angle request of at least one preceding control period by the control device (16),
- Determining a target angle speed based on the present target angle and the at least one preceding target angle by the control device (16),
the method being **characterized in that** it further comprises:
- Determining at least one adapted property of the roadwheel actuator (14) by the control device (16),
- Determining a control signal for the electric motor (22) by the control device (16) based on at least the steering angle request and the adapted property of the roadwheel actuator (14), and
- Outputting the control signal by the control device (16) to the electric motor (22) or an inverter coupled thereto.

3. The method according to claim 1 or 2, wherein the adapted target angle and/or the at least one adapted property of the roadwheel actuator (14) is determined only if:
- the target angle speed exceeds a first target angle speed threshold, and/or
- a vehicle speed of the vehicle (10) is determined to be within a first vehicle speed threshold range by the control device (16), and/or
- the present target angle indicates an impending change of a direction of the target angle, and/or
- the present target angle indicates an impending stop of a steering movement.

4. The method according to claim 2 or claim 3 insofar referring back to claim 2, wherein a determination of the adapted target angle and/or the at least one adapted property of the roadwheel actuator (14) is deactivated if:
- a direction of the present target angle compared to the at least one preceding target angle is changed relative to the reference direction and:
∘ a tolerance time period has passed, or
∘ the target angle speed is larger than a second target angle speed threshold,
and/or
- a first time period has passed after the control device determined that the present target angle indicates an impending change of a direction of the target angle, or that the present target angle indicates an impending stop of a steering movement, and/or
- the present target angle speed is smaller than a third target angle speed threshold for a second time period, and/or
- the direction of the present target angle compared to the at least one preceding target angle did not change relative to the reference direction and the present target angle speed is larger than at least one preceding target angle speed of at least one preceding control period, and/or
- the vehicle speed of the vehicle (10) is determined to exceed a second vehicle speed threshold range.

5. The method according claim 4, wherein, in case the at least one property of the roadwheel actuator (14) was adapted, the at least one property of the roadwheel actuator (14) is modified to an initial property thereof before the adaption.

6. The method according to any one of the preceding claims, wherein the control device (16) determines a ramp parameter, and wherein the control device (16) enables and/or disables a change between the present target angle and the adapted target angle and/or between an unmodified property of the roadwheel actuator (14) and the adapted property of the roadwheel actuator (14) based on the ramp parameter.

7. The method according to any one of the at least one preceding claims, wherein the at least one adapted property of the roadwheel actuator (14) is based on a motor torque gradient limiter (40) configured to limit a torque gradient of a torque output by the electric motor (22) of the roadwheel actuator (14) to be smaller than a torque gradient threshold.

8. The method of claim 7, wherein the torque gradient is limited based on at least one of:
- a first constant value,
- the vehicle speed,
- the torque applied by the electric motor (22) of the roadwheel actuator (14),
- the target angle speed,
- a derivative of the target angle speed, and
- the present target angle.

9. The method according to any one of the at least one preceding claims, wherein the adapted target angle is based on a target angle request limiter (38) configured to limit the derivative of the target angle speed.

10. The method of claim 9, wherein the target angle request limiter (38) limits the derivative of the target angle speed based on a target angle speed derivative interval defining a negative target angle speed derivative threshold and a positive target angle speed derivative threshold.

11. The method of claim 10, wherein the negative target angle speed derivative threshold and the positive target angle speed derivative threshold individually or cooperatively depend on at least one of:
- a second constant value,
- the vehicle speed,
- the target angle speed, and
- the present target angle.

12. The method according to any one of the at least one preceding claims, wherein the adapted target angle is based on a target angle filter (36) applied by the control device (16) to the present target angle.

13. The method of claim 12, wherein the target angle filter (36) is a first-order low-pass filter or a higher-order low-pass filter.

14. The method of claims 12 or 13, wherein a cut-off frequency and/or poles and/or zeros of the target angle filter (36) depend on at least one of:
- a third constant value,
- the vehicle speed,
- the target angle speed,
- the derivative of the target angle speed, and
- the present target angle.

15. The method according to any one of the preceding claims, wherein the at least one adapted property of the roadwheel actuator (14) is based on a modified stiffness of an angle controller (32) of the roadwheel actuator (14).

16. The method of claim 15, wherein the stiffness of the angle controller (32) is modified based on at least one of:
- a gain of the angle controller (32),
- a pole of the angle controller (32), and
- a zero of the angle controller (32).

17. The method of claim 16, wherein the gain and/or the pole and/or the zero of the angle controller (32) is modified based on at least one of:
- a fourth constant value,
- the vehicle speed,
- the target angle speed,
- the derivative of the target angle speed, and
- the present target angle.

18. A steer-by-wire system (12) for a vehicle (10), the steer-by-wire system (12) comprising at least a roadwheel actuator (14) and a control device (16), the roadwheel actuator (14) including an electric motor (22) coupled to steerable roadwheels (20) of the vehicle (10), wherein the steer-by-wire system (12) is configured for carrying out the method according to any one of the at least one preceding claims based on the control device (16) and/or the roadwheel actuator (14).
